# EUROPÄISCHE PATENTSCHRIFT

(11) **EP 2 882 632 B1**
(45) Veröffentlichungstag und Bekanntmachung des Hinweises auf die Patenterteilung: **20.07.2016**
(21) Anmeldenummer: 13747795.6
(22) Anmeldetag: 03.08.2013
(51) Int. Cl.: B62D 15/02, B60W 30/06

(54) **VERFAHREN ZUM DURCHFÜHREN EINES PARKVORGANGS EINES FAHRZEUGS MITTELS EINES FAHRERASSISTENZSYSTEMS**
METHOD TO CARRY OUT A PARKING SEQUENCE FOR A VEHICLE USING A DRIVER ASSISTANT SYSTEM
METHODE D'EXECUTION DU PARCAGE D'UN VEHICULE A PARTIR D'UN SYSTEME ASSISTANCE AU PARCAGE

(30) Priorität: 10.08.2012 DE 102012015922
(43) Veröffentlichungstag der Anmeldung: 17.06.2015
(73) Patentinhaber: Daimler AG, 70327 Stuttgart (DE)
(72) Erfinder: BONNET, Christophe, 70771 Leinfelden-Echterdingen (DE); HILLER, Andreas, 70563 Stuttgart (DE); KUENZEL, Gerhard, 71726 Benningen (DE); MOSER, Martin, 70736 Fellbach (DE); SCHIEMENZ, Heiko, 70597 Stuttgart (DE)
(74) Vertreter: JENSEN & SON
(86) Internationale Anmeldenummer: PCT/EP2013/002328
(87) Internationale Veröffentlichungsnummer: WO 2014/023411

(56) Entgegenhaltungen:
- EP-A1- 2 295 281
- EP-A2- 1 249 379
- DE-A1-102011 003 231

## Beschreibung

Die Erfindung betrifft ein Verfahren zum Durchführen eines Parkvorgangs eines Fahrzeugs mittels eines Fahrerassistenzsystems. Dabei werden Objekte in einem Umfeld des Fahrzeugs und ihre jeweiligen Relativpositionen zu dem Fahrzeug erfasst. Unter Berücksichtigung der Umfeld- und Relativpositionserfassung werden dann eine Zielposition und eine Trajektorie zur Zielposition ermittelt. Anschließend wird der Parkvorgang entlang der ermittelten Trajektorie mittels einer Steuereinrichtung durchgeführt, wobei die Trajektorie während der Durchführung des Parkvorgangs unter Berücksichtigung von fortlaufend erfassten Umfeldobjekten angepasst wird.

Die Parkplätze, Stellplätze und Garagen für Fahrzeuge sind aufgrund der knappen Platzsituation in Städten und Parkhäusern oft klein ausgelegt. Ist ein Fahrzeug beispielsweise in eine Parklücke zwischen zwei seitlich stehenden Fahrzeugen eingeparkt, lassen sich die Türen des Fahrzeugs meist nur noch mit einem vergleichsweise kleinen Winkel öffnen. Die Fahrzeugnutzer können das eingeparkte Fahrzeug nur schwer verlassen.

Vor diesem Hintergrund wurden in den letzten Jahren automatische und autonome Lösungen entwickelt. Dabei können die Nutzer des Fahrzeugs vor der Parklücke aussteigen und dann den autonomen Parkvorgang über Funk initiieren. Hier gibt es zwei Lösungen. Bei der ersten Lösung kann das Fahrzeug lediglich gerade nach vorne und nach hinten bewegt werden. Bei der zweiten Lösung werden die Parklücke und die Umgebung des Fahrzeugs mittels geeigneter Sensorvorrichtungen detektiert. Das Fahrzeug kann autonom in dieser erfassten Parklücke einparken.

In der DE 102 57 722 A1 ist ein Verfahren zum Einparken eines Fahrzeugs beschrieben. Dabei werden die Hindernisse im Umfeld des Fahrzeugs erfasst. Sowohl die Abstände des Fahrzeugs zu Hindernissen, als auch die Länge oder die Breite einer Parklücke werden bestimmt. Dabei werden Sensoren sowohl zur Parklückenbestimmung als auch zur Abstandsmessung verwendet. Bei einem Unterschreiten eines vorgegebenen Abstands zu einem Hindernis wird ein Warnsignal an den Fahrer ausgegeben.

Aus der EP 1 249 379 A2 ist ein Verfahren zum Verbringen eines Kraftfahrzeugs in eine Zielposition bekannt. Dabei wird das Kraftfahrzeug in eine Startposition nahe der angestrebten Zielposition gebracht. Nach einer ersten fahrerseitigen Aktivierung wird die Umgebung des Kraftfahrzeugs fortlaufend abgetastet und die aktuelle Fahrzeugposition fortlaufend ermittelt. Anhand der ermittelten Umgebungs- und Positionsinformationen wird eine Trajektorie zur Zielposition ermittelt. Zum Abfahren der Trajektorie werden Steuerinformationen für das Verbringen des Kraftfahrzeugs in die Zielposition generiert. Nach einer zweiten fahrerseitigen Aktivierung werden die von den Steuerinformationen abhängigen Steuerbefehle an den Antriebsstrang, die Bremsanlage und die Lenkung des Kraftfahrzeuges abgegeben. Dadurch fährt das Kraftfahrzeug fahrerunabhängig in die Zielposition. Die fahrerseitige Aktivierung kann außerhalb des Kraftfahrzeugs stattfinden.

In der DE 10 2009 041 587 A1 ist eine Fahrerassistenzeinrichtung beschrieben. Die Steuereinrichtung gibt Steuersignale an eine Antriebs- und Lenkvorrichtung des Kraftfahrzeugs aus und veranlasst ein Durchführen eines autonomen Parkvorgangs. Mittels einer Fernbedienung können Befehle an der Steuereinrichtung von außerhalb des Fahrzeugs abgegeben werden. Nach Empfangen eines vorbestimmten Unterbrechungsbefehls kann ein bereits begonnen Parkvorgang des Kraftfahrzeugs unterbrochen werden. Mit der Steuereinrichtung ist zumindest eine Kamera gekoppelt und gewinnt Bilddaten über einen Umgebungsbereich des Kraftfahrzeugs. Die Steuereinrichtung sendet die von der Kamera gewonnenen Bilddaten oder daraus berechnete Bilddaten an die Fernbedienung. Die Fernbedienung stellt diese Bilddaten mittels komplexer Anzeige- und Bedieneinheiten dar.

In der DE 10 2011 003 231 A1 sind ein Verfahren und eine Vorrichtung zum automatischen Durchführen eines Fahrmanövers mit einem Kraftfahrzeug beschrieben. Dabei umfasst das Verfahren folgende Schritte: (a) Erfassen der Umgebung des Kraftfahrzeugs mit einem ersten Erfassungssystem während der Vorbeifahrt an einer Parklücke, (b) Berechnen einer Trajektorie, entlang der das Kraftfahrzeug während des Fahrmanövers bewegt wird, anhand der in Schritt (a) erfassten Umgebungsdaten, (c) automatisches Bewegen des Kraftfahrzeugs entlang der Trajektorie zur Durchführung des Fahrmanövers, wobei die Umgebung des Kraftfahrzeugs mit einem zweiten vom ersten verschiedenen Erfassungssystem erfasst wird während sich das Kraftfahrzeug bewegt. Die vom ersten Erfassungssystem erfassten Daten werden auf ein portables Steuergerät übertragen. Durch die Verwendung des portablen Steuergerätes ist es möglich, das Fahrmanöver auch außerhalb des Fahrzeugs zu überwachen. Der Fahrer kann das Fahrmanöver unterbrechen, bequem aussteigen und den Fahrmanöver anschließend von außerhalb des Fahrzeugs fortführen. Hier wird die Unterbrechung des Fahrmanövers von der Fahrer gesteuert und nicht vom Fahrzeug.

Der nächstliegende Stand der Technik ist in der DE 10 2011 003 231 A1 zu sehen.

In der DE 10 2009 046 674 A1 ist ein Verfahren zur Unterstützung eines Parkvorgangs eines Kraftfahrzeugs in eine Stellposition mittels einer Parkvorrichtung beschrieben. Dabei weist die Parkvorrichtung wenigstens eine Sensoreinrichtung auf, welche Sensoreinrichtung wenigstens zur Erfassung der Konturen der Stellposition ausgebildet ist, wobei das Verfahren wenigstens die folgenden Schritte aufweist: Anfahren eines Bereiches vor zumindest einer Stellposition mit dem Kraftfahrzeug und Erfassung des Bereiches durch die Sensoreinrichtung, Einleiten einer Fahreraktion durch den Fahrer des Kraftfahrzeugs, die derart ausgebildet ist, dass durch die Parkvorrichtung die Absicht des Fahrers des Kraftfahrzeugs erkannt wird, das Kraftfahrzeug auf einer Stellposition zu parken, Erkennung der Anordnung der Stellposition durch die Sensoreinrichtung relativ zum Kraftfahrzeug, instantane Erfassung der Konturen der Stellposition durch die Sensoreinrichtung und Führung des Kraftfahrzeugs auf die Stellposition durch die Parkvorrichtung. Hier wird eine Auswahl verschiedener Parktrajektorien oder Anordnungen innerhalb der Stellposition dem Nutzer angeboten.
In der DE 10 2005 046 827 A1 wird ein Verfahren zur Einparkunterstützung vorgeschlagen, bei dem bei einer noch nicht abschließenden, zumindest teilweisen Positionierung des Fahrzeugs in einer Parklücke die Abmessungen der Parklücke bestimmt werden und eine Trajektorie des Fahrzeugs zum Abschluss des Einparkvorgangs bestimmt wird. Hier werden dem Fahrer verschiedene Trajektorien zur Auswahl angeboten.
Mit den bisher bekannten Vorrichtung und Verfahren hat der Nutzer des Fahrzeugs zwar die Möglichkeit verschiedene Trajektorien beim Einparkvorgang auszuwählen, aber keine Auswahlmöglichkeit, um ein bestimmtes Parkmanöver durchzuführen. Darüber hinaus bietet dem Fahrerassistenzsystem den Fahrer nicht die Möglichkeit zwischen Parkvorgänge mit Fahrer im Fahrzeug und außerhalb des Fahrzeugs auszuwählen.

Es ist daher die Aufgabe der vorliegenden Erfindung, das eingangs beschriebene Verfahren derart zu optimieren, dass ein Parkvorgang besonders zuverlässig und benutzerfreundlich durchgeführt werden kann.

Diese Aufgabe wird durch ein Verfahren zum Durchführen eines Parkvorgangs eines Fahrzeugs mit den Merkmalen des Patentanspruchs 1 gelöst. Vorteilhafte Ausführungen der Erfindung sind Gegenstand der abhängigen Ansprüche.

Zur Beginn des Parkvorgangs steht dem Nutzer des Fahrerassistenzsystems im Fahrzeug eine Auswahlmöglichkeit zwischen mindestens zwei Parkmanövern zur Verfügung. Das erste Parkmanöver ist ein direktes Parkmanöver, dabei wird einen in Stand der Technik bekannten Parkvorgang von der Startposition direkt zur Ziel position durchgeführt. Bei dem weiteren Parkmanöver wird ein Haltepunkt entlang der Trajektorie ermittelt und dieser Haltepunkt dient zum Ausstieg eines Nutzers.

Im Vergleich zu dem direkten Parkmanöver wird bei dem weiteren Parkmanöver nicht nur eine Trajektorie zur Zielposition, sondern auch ein Haltepunkt entlang der Trajektorie ermittelt. Das Fahrzeug wird an diesem Haltepunkt angehalten. D. h. bei der Durchführung des Parkvorgangs fährt das Fahrzeug nicht automatisch wie beim direkten Parkmanöver bis zur Zielposition, sondern hält beim Abfahren der Trajektorie vor der Zielposition in einem geeigneten Haltepunkt an. Um diesen Haltepunkt zu ermitteln, werden sowohl die festen Objekte wie z.B. Wand als auch die bewegten Objekte wie z.B. Fußgänger im Umfeld fortlaufend berücksichtigt. Somit kann eine enge Parklücke, eine enge Garage, oder eine schwer anzufahrende Parklücke wie Parklücke neben einer Wand, einer Hecke oder ähnliches, wo ein Ausstieg des Nutzers erschwert ist, genutzt werden.

Bevorzugt wird der Haltepunkt zum Ausstieg eines Nutzers derart ermittelt, dass die Zielposition bei der Fortführung des Parkvorgangs in einem Zug, also ohne Fahrtrichtungswechsel, erreicht wird. Dies wird im Folgenden als einzügiges Parken bezeichnet.

Um ein Fahrzeug in einer Zielposition entlang einer ermittelten Trajektorie zu bringen, werden oft mehrere Richtungsänderungen von Vorwärtsfahrt und Rückwärtsfahrt des Fahrzeugs während des Parkvorgangs durchgeführt. Dies wird im Folgenden als Parken mit mehrzügigen Rangiervorgängen genannt. Startet ein Nutzer einen solchen Parkvorgang, ist eine genaue Überwachung des gesamten Parkvorgangs durch den Nutzer von großer Bedeutung. Dabei ist zu berücksichtigen, dass nicht alle Hindernisse mit einer bestimmten Umfelderkennungseinrichtung erkannt werden. Beispielweise können dünne Stangen mittels Ultraschallsensor nicht sicher erkannt werden. Darüber hinaus muss die komplette Fahrzeugkontur, wie z.B. Außenspiegel oder ein beladenes Dach, sicher überwacht werden. Vor allem bei mehrzügigen Rangiervorgängen muss der Nutzer stets informiert werden, in welcher Richtung das Fahrzeug den nächsten Zug fährt. Ein komplexes Bedien- und Anzeigekonzept ist dafür notwendig. Sofern der Nutzer sich außerhalb des Fahrzeugs befindet, muss er gegebenenfalls bei einem Richtungswechsel des Fahrzeugs seinen Standort wechseln, um den Bereich vor bzw. hinter dem Fahrzeug einzusehen.

Diese Überwachung vereinfacht sich deutlich, wenn notwendige Richtungsänderungen von Vorwärts- und Rückwärtsfahrt des Fahrzeugs vor dem Haltepunkte durchgeführt und von einem Nutzer im Fahrzeug überwacht werden. Der Nutzer kann im Fahrzeug jederzeit aktiv eingreifen.

Bevorzugt wird der Abschluss des Parkvorgangs nach dem Haltepunkt durch einen Nutzer des Fahrzeugs aktiviert. Hier wäre auch denkbar, wieder eine Auswahlmöglichkeit zwischen verschiedenen Parkmanövern dem Nutzer des Fahrassistenzsystems anzubieten.

Somit erhält der Nutzer des Fahrzeugs damit die Möglichkeit, die aktuelle Parksituation zu überprüfen und den Parkvorgang durch eine erneute Aktivierung fortzusetzen. Dies ist vorteilhaft, weil der Wunsch des Nutzers auf besonders einfache Weise berücksichtigt wird.

Bevorzugt wird der Abschluss des Parkvorgangs nach dem Haltepunkt außerhalb des Fahrzeugs initiiert und durchgeführt. Die Fortsetzung des Parkvorgangs nach dem Haltepunkt kann von einem außerhalb des Fahrzeugs befindlichen Nutzer initiiert und beendet werden.
Ein von außen gesteuertes Parkmanöver ist besonders vorteilhaft, wenn eine sehr enge Parklücke vorliegt, in welche zwar das Fahrzeug noch hineinpasst, jedoch ein Aussteigen eines Nutzers nicht mehr möglich wäre. Somit können auch enge Parkplätze vom System unterstützt werden. Der Kundennutzen eines Fahrerassistenzsystems kann damit erheblich gesteigert werden. Darüber hinaus können eine begrenzte Parkfläche wie z.B. Parkhäuser besser ausgenutzt werden.

Ein weiterer Vorteil der Aktivierung der Fortsetzung des Parkvorgangs von außen ist, dass der Nutzer bequem aussteigen kann. Er kann den Parkvorgang von außen ohne großen Überwachungsaufwand beenden, vor allem wenn das Fahrzeug in einem Zug ohne Fahrtrichtungswechsel in die Zielposition gefahren wird. Wenn die Aktivierung der Fortsetzung des Parkvorgangs von außerhalb erst nach dem Haltepunkt freigegeben wird, d.h. nur für einzügiges Parken, können einfache Bedieneinrichtungen dafür verwendet werden.

Bevorzugt wird in diesem Verfahren der Haltpunkt des Fahrzeugs zum Ausstieg eines Nutzers so ermittelt, dass die Fahrzeugtüren ohne Kollision mit den erfassten Objekten geöffnet werden können. Damit ist ein bequemes und sicheres Aussteigen des Nutzers möglich.

Bevorzugt werden die Trajektorie und der Haltpunkt zum Ausstieg eines Nutzers so ermittelt und angepasst, dass zu den erfassten Objekten ein vorgegebener Abstand eingehalten wird. Beispielsweise handelt es sich bei diesen Objekten um weitere Fahrzeuge, so ist ein vorgegebener Abstand einzuhalten. Dieser einzuhaltende Abstand berücksichtigt z.B. den Fall, in welchem eine Fahrzeugtür des weiteren Fahrzeugs geöffnet wird. Das Fahrzeug, das während des Parkvorgangs bewegt oder im Haltepunkt steht, darf nicht mit der geöffneten Tür kollidieren. Insgesamt können Sicherheitsabstände zu Objekten entlang der Trajektorie während des Parkvorgangs oder des Haltevorgangs vorgesehen werden, so dass eine kollisionsfreie Durchführung des Parkvorgangs unterstützt wird.

Bei einer Weiterbildung des Verfahrens werden die Trajektorie und der Haltepunkt zum Ausstieg eines Nutzers so ermittelt und angepasst, dass die Sitzplatzbelegung des Fahrzeugs berücksichtigt wird.

Dabei wird z.B. die Positionierung des Fahrzeugs in einer Parklücke oder neben einer seitlichen Begrenzung in Abhängigkeit von einer Sitzplatzbelegung des Fahrzeugs angepasst. Die seitlichen Abstände des Fahrzeugs zu Objekten, z.B. anderen Fahrzeugen, welche die Parklücke oder den Haltepunkt seitlich begrenzen, können so gewählt werden, dass die jeweiligen Fahrzeugnutzer noch problemlos aus dem Fahrzeug aussteigen können. Sitzt lediglich ein Fahrer in dem Fahrzeug, kann auf der Beifahrerseite ein entsprechend geringerer Abstand zu einem die Parklücke oder den Haltepunkt begrenzenden Objekt gewählt werden als auf der Fahrerseite. Dies ermöglicht eine optimale Ausnutzung eines engen Parkplatzes.

Bevorzugt wird der Abschluss des Parkvorgangs nach dem Haltepunkt von einem Nutzer entweder mittels einer mobilen Bedieneinheit oder mittels Sprachbedienungseinrichtung oder mittels Gestikerkennungseinrichtung initiiert.

Besonderes wenn die Freigabe für die Aktivierung der Fortsetzung des Parkvorgangs von außerhalb des Fahrzeugs erst nach dem Haltepunkt erfolgt, d.h. nur für einzügiges Parken, kann eine einfache Bedieneinrichtung verwendet werden. Dies kann beispielsweise mittels einer einfachen mobilen Bedieneinheit mit zwei Bedienelementen, mit denen getrennt die Vorwärts- und die Rückwärtsfahrt aktiviert wird, realisiert werden. Ebenfalls kann die Vorwärts- bzw. die Rückwärtsfahrt einfach durch Sprachbefehle oder zwei verschiedene Handzeichen realisiert werden.

Schließlich wird bevorzugt, dass die Fahrtrichtung des Fahrzeugs während des Parkvorgangs durch eine Leuchtvorrichtung am Fahrzeug angezeigt wird. Ein Lichtzeichen kann verwendet werden, um die Fahrtrichtung des Fahrzeugs den außerhalb des Fahrzeugs befindlichen Nutzer zu verdeutlichen. Dazu können beispielsweise die vorderen Blinkleuchten bei der Vorwärtsfahrt und die hinteren Blinkleuchten bei der Rückwärtsfahrt angesteuert werden.

Somit kann eine einfache mobile Bedieneinrichtung verwendet werden. Auf einer komplexen Anzeigevorrichtung, die die Fahrtrichtung des Fahrzeugs darstellt, kann verzichtet werden. Ein Nutzer, der außerhalb des Fahrzeugs befindet, kann stets seinen Blink auf das Fahrzeug richten und damit den Parkvorgang besser überwachen.

Bevorzugt wird die Blinkfrequenz der Leuchtvorrichtung des Fahrzeugs abhängig von dem Abstand zu den erfassten Objekten variiert. Über die Blinkfrequenz wird dem Nutzer der Abstand zum nächsten erkannten Hindernis mitgeteilt. Je enger der Abstand, desto schneller blinkt der Leuchte.

Dies ermöglicht eine besonders einfache Darstellung der Fahrtrichtung und des Abstands zum nächsten erfassten Objekt.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung der Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform des erfindungsgemäßen Verfahrens dargestellt. Es zeigen jeweils in schematischer Darstellung,
- Fig. 1: Draufsicht auf eine Parksituation, wobei ein Fahrzeug rückwärts in eine Querparklücke manövriert wird;
- Fig. 2: Draufsicht auf eine Parksituation, wobei ein Fahrzeug vorwärts in eine Längsparklücke manövriert wird;

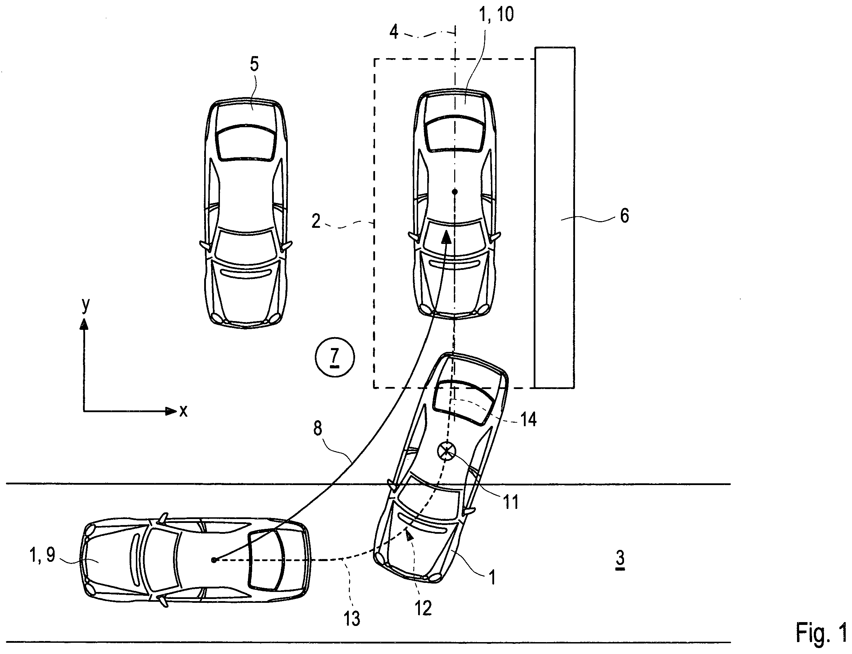

Fig. 1 zeigt in schematischer Darstellung eine Parksituation, bei welcher ein Fahrzeug 1 in eine Parklücke 2 rückwärts eingeparkt wird. Das Fahrzeug 1 befindet sich auf einer in x-Richtung befahrbaren Fahrbahn 3. An die Fahrbahn 3 grenzt die Parklücke 2 derart an, dass eine Längsachse 4 der Parklücke 2 in y-Richtung verläuft und somit senkrecht zu einer Längsachse der Fahrbahn 3 ist. Die Parklücke 2 ist seitlich jeweils unmittelbar durch z.B. ein Fahrzeug 5 und eine Wand 6 begrenzt. Ein zusätzliches Objekt beispielsweise ein Pfosten oder ein Fußgänger 7 befindet sich seitlich vor der Parklücke 2.

Die Parklücke 2 wird während einer Vorbeifahrt des Fahrzeugs 1 an der Parklücke 2 erkannt. Die Objekte 5, 6 und 7 im Umfeld des Fahrzeugs 1 werden erfasst. Anschließend werden zwei Parkmanöver: "Direktes Parken" oder "Parken mit Haltepunkt", unter Berücksichtigung der Umfeld- und Relativpositionserfassung ermittelt und dem Nutzer im Fahrzeug 1 zur Auswahl angeboten.
Wählt der Nutzer im Fahrzeug das erste Parkmanöver "Direktes Parken", so wird eine Trajektorie 8 für den Parkvorgang von der Startposition 9 zur Zielposition 10 in der Parklücke 2 ermittelt. Anschließend erfolgt ein zumindest teilautonomes Steuern des Fahrzeugs 1 entlang der Trajektorie 8 mittels einer Steuereinrichtung, wobei die Trajektorie 8 während der Durchführung des Parkmanövers unter Berücksichtigung von den fortlaufend erfassten Umfeldobjekten 5, 6 und 7 angepasst wird.

Wählt der Nutzer im Fahrzeug das zweite Parkmanöver "Parken mit Haltepunkt", so wird im Vergleich zu "Direktes Parken" eine Trajektorie 12 mit einem Haltepunkt 11 ermittelt. Der Parkvorgang wird von Startposition 9 zum Haltepunkt 11 durchgeführt und das Fahrzeug 1 wird am Haltepunkt 11 angehalten.

Dieser Haltepunkt 11 soll immer ermittelt werden, wenn die Breite der Parklücke 2 unter einem bestimmten Grenzwert liegt, z.B. kleiner als Gesamtbreite des Fahrzeugs 1 inklusiv geöffneter Seitentüren. Dabei ist die Position des Haltepunkts 11 entlang der Trajektorie 12 so zu bestimmen, dass der Nutzer des Fahrzeugs 1 genügend Platz hat, bequem und sicher auszusteigen.

Des Weiteren kann die Ermittlung und Anpassung des Haltepunktes 11 so erfolgen, dass alle erforderlichen Fahrtrichtungsänderungen von Vorwärtsfahrt und Rückwärtsfahrt des Fahrzeugs vor dem Haltepunkt 11 durchgeführt werden. Nach dem Anhalten am Haltepunkt 11 wird das Fahrzeug 1 dann in einem Zug ohne Fahrtrichtungswechsel in die Zielposition 10 gefahren. Die Trajektorie 12 wird durch den Haltepunkt 11 in zwei Teil-Trajektorien 13, 14 aufgeteilt. Die erste Teil-Trajektorie 13 umfasst alle erforderliche Fahrtrichtungsänderungen von Vorwärtsfahrt und Rückwärtsfahrt des Fahrzeugs. Der Parkvorgang wird von einem Nutzer innerhalb des Fahrzeugs 1 gestartet. Der Nutzer bleibt im Fahrzeug 1 sitzend und überwacht den Parkvorgang, während das Fahrzeug 1 zumindest teilautomatisch von Startposition 9 entlang der Trajektorie 13 bis zum Haltepunkt 11 fährt. Ab dem Haltepunkt 11 wird der Abschluss des Parkvorgangs, der von außerhalb des Fahrzeugs 1 initiiert wird, freigegeben.

Steigt der Nutzer des Fahrzeugs 1 am Haltepunkt 11 aus, so hat er die Möglichkeit die aktuelle Parksituation von außen zu überprüfen. Er kann den Abschluss des Parkvorgangs von außerhalb des Fahrzeugs 1 aktivieren. Dabei überwacht der Nutzer die gesamte Durchführung und kann gegebenenfalls jederzeit die Durchführung unterbrechen. Die zweite Teil-Trajektorie 14 umfasst keine Fahrtrichtungsänderung, d.h. nur Vorwärts- oder Rückwärtsfahrt. Nach der Aktivierung des Nutzers beendet das Fahrzeug 1 den Parkvorgang entlang der Trajektorie 14 und parkt das Fahrzeug 1 in der Zielposition 10 ein.

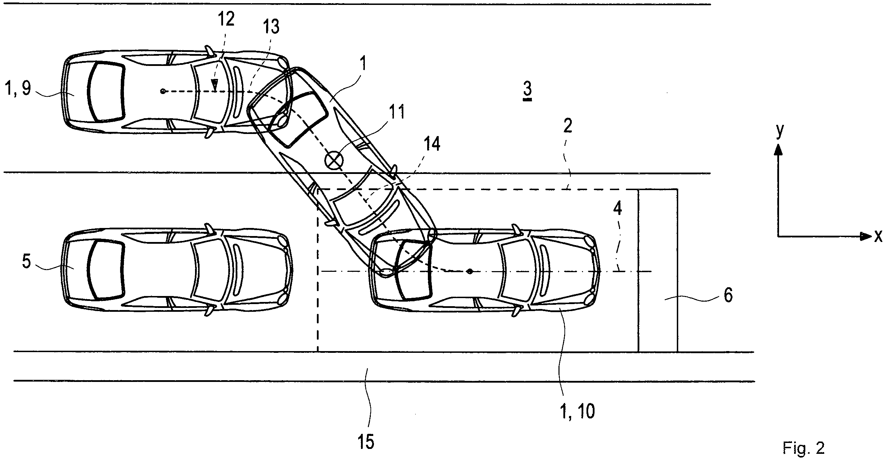

Fig. 2 zeigt in schematischer Darstellung eine Parksituation, bei welcher ein Fahrzeug 1 in eine Parklücke 2 vorwärts eingeparkt wird. Das Fahrzeug 1 befindet sich auf einer in x-Richtung befahrbaren Fahrbahn 3. An die Fahrbahn 3 grenzt die Parklücke 2 derart an, dass eine Längsachse 4 der Parklücke 2 in x-Richtung verläuft und somit parallel zu einer Längsachse der Fahrbahn 3 ist. Die Parklücke 2 ist seitlich jeweils unmittelbar durch z.B. ein Fahrzeug 5 und Wände 6 und 15 begrenzt.

Wird das zweite Parkmanöver "Parken mit Haltepunkt" von den möglichen Parkmanövern ausgewählt, so wird eine Trajektorie 12 mit einem Haltepunkt 11 ermittelt. Der Parkvorgang wird von Startposition 9 zum Haltepunkt 11 durchgeführt und das Fahrzeug 1 wird am Haltepunkt 11 angehalten. Dabei kann die Parklücke 2 so angefahren werden, dass zur Beginn des Parkvorgangs keine vollständige Trajektorie 12 bis zur Zielposition ermittelt wird, sondern eine kurze Trajektorie innerhalb des durch Umfelderfassung erfassbaren Bereiches. D.H. das Fahrzeug tastet vor.

Die Ermittlung und Anpassung der Trajektorie 12 und des Haltepunkts 11 werden so ermittelt, dass das Fahrzeug 1 sich zu einem langgestreckten Objekt, hier als Wand 15 dargestellt, parallel ausrichtet. Gleichzeitig wird die Position des Haltepunkts 11 so bestimmt, dass der Nutzer des Fahrzeugs 1 genügend Platz hat, bequem und sicher auszusteigen. Hier kann beispielsweise der Haltepunkt 11 so ermittelt werden, dass der seitliche Abstand des Fahrzeugs zum Fahrzeug 5 und zur Wand 15 größer ist als die Gesamtbreite des Fahrzeugs 1 inklusiv geöffneter Seitentüren.

Wie in Fig. 1 umfasst die Trajektorie 12 einen Haltepunkt und zwei Teil-Trajektorien 13, 14. Die erste Teil-Trajektorie 13 umfasst alle erforderlichen Fahrtrichtungsänderungen von Vorwärtsfahrt und Rückwärtsfahrt des Fahrzeugs. Der Parkvorgang wird von einem Nutzer innerhalb des Fahrzeugs 1 gestartet. Am Haltepunkt 11 steigt beispielsweise der Beifahrer aus und aktiviert den Abschluss des Parkvorgangs außerhalb des Fahrzeugs 1. Der Fahrer bleibt im Fahrzeug 1 sitzend und überwacht den Parkvorgang, während das Fahrzeug 1 in einem Zug in der Zielposition 10 entlang der Teil-Trajektorie 14 fährt. Des Weiteren kann bei der Ermittlung und Anpassung der Trajektorie 12 und des Haltepunkts 11 die Sitzplatzbelegung des Fahrzeugs 1 berücksichtigt werden. Die Positionierung des Fahrzeugs 1 in einer Parklücke 2 oder am Haltepunkt 11 kann in Abhängigkeit von einer Sitzplatzbelegung des Fahrzeugs 1 angepasst werden. Wie im Fig. 1 und 2 gezeigten Fall, steigt der Beifahrer am Haltepunkt 11 aus, so wird die Teil-Trajektorie 14 so angepasst, dass auf der Beifahrerseite weniger Platz zu dem Objekt 6 bzw. 15 gelassen wird als auf der Fahrerseite. Für einen Fall, bei welchem auch der Fahrersitz nicht belegt ist, kann das Fahrzeug 1 bis auf einen geringen Mindestabstand an die entsprechenden Objekte wie z.B. 5 in Fig. 1 herangefahren wird.

## Patentansprüche

1. Verfahren zum Durchführen eines Parkvorgangs eines Fahrzeugs mittels eines Fahrerassistenzsystems, mit den Schritten:
- Erfassen von Objekten in einem Umfeld des Fahrzeugs;
- Ermitteln einer Zielposition unter Berücksichtigung der Umfelderfassung;
- Ermitteln einer Trajektorie zur Zielposition;
- Durchführung des Parkvorgangs entlang der ermittelten Trajektorie mittels einer Steuereinrichtung, wobei die Trajektorie während der Durchführung des Parkvorgangs unter Berücksichtigung von fortlaufend erfassten Umfeldobjekten angepasst wird;
**dadurch gekennzeichnet, dass**
- zu Beginn des Parkvorgangs entweder ein direktes Parkmanöver oder ein weiteres Parkmanöver von einem Nutzer des Fahrerassistenzsystems ausgewählt wird, und
- bei der Auswahl des weiteren Parkmanövers ein Haltepunkt (11) entlang der Trajektorie (12) ermittelt wird, wobei der Haltepunkt (11) zum Ausstieg eines Nutzers des Fahrzeugs (1) vorgesehen ist und die Zielposition (10) bei der Fortführung des Parkvorgangs in einem Zug erreicht wird.

2. Verfahren nach Anspruch 1,
**dadurch gekennzeichnet, dass**
der Abschluss des Parkvorgangs nach dem Haltepunkt (11) durch einen Nutzer des Fahrzeugs (1) aktiviert wird.

3. Verfahren nach einem der vorhergehenden Ansprüche,
**dadurch gekennzeichnet, dass**
der Abschluss des Parkvorgangs nach dem Haltepunkt (11) außerhalb des Fahrzeugs (1) initiiert und durchgeführt wird.

4. Verfahren nach einem der vorhergehenden Ansprüche,
**dadurch gekennzeichnet, dass**
der Haltepunkt (11) des Fahrzeugs (1) zum Ausstieg eines Nutzers so ermittelt wird, dass die Fahrzeugtüren kollisionsfrei geöffnet werden.

5. Verfahren nach einem der vorhergehenden Ansprüche,
**dadurch gekennzeichnet, dass**
die Trajektorie (12, 13, 14) und der Haltpunkt (11) zum Ausstieg eines Nutzers so ermittelt und angepasst wird, dass zu den erfassten Objekten (5, 6, 7) ein vorgegebener Abstand eingehalten wird.

6. Verfahren nach einem der vorhergehenden Ansprüche,
**dadurch gekennzeichnet, dass**
die Trajektorie (12, 13, 14) und der Haltepunkt (11) zum Ausstieg eines Nutzers unter Berücksichtigung der Sitzplatzbelegung des Fahrzeugs (1) ermittelt und angepasst wird.

7. Verfahren nach einem der vorhergehenden Ansprüche,
**dadurch gekennzeichnet, dass**
der Abschluss des Parkvorgangs nach dem Haltepunkt (11) von einem Nutzer entweder mittels einer mobilen Bedieneinheit oder mittels Sprachbedienungseinrichtung oder mittels Gestikerkennungseinrichtung initiiert wird.

8. Verfahren nach einem der vorhergehenden Ansprüche,
**dadurch gekennzeichnet, dass**
die Fahrtrichtung des Fahrzeugs (1) während des Parkvorgangs durch eine Leuchtvorrichtung am Fahrzeug angezeigt wird.

9. Verfahren nach einem der vorhergehenden Ansprüche,
**dadurch gekennzeichnet, dass**
die Blinkfrequenz der Leuchtvorrichtung des Fahrzeugs (1) in Abhängigkeit von dem Abstand zu den erfassten Objekten (5, 6, 7) gesteuert wird.

## Claims

1. Method for carrying out a parking operation of a vehicle by means of a driver assistance system, the method comprising the steps of:
- detecting objects in an environment of the vehicle;
- determining a target position taking account of the environment detection;
- determining a trajectory to the target position;
- carrying out the parking operation along the determined trajectory by means of a control unit, wherein the trajectory is adapted to take account of successively detected objects in the environment during the parking operation;
**characterised in that**
- at the start of the parking operation, either a direct parking manoeuvre or a further parking manoeuvre is selected by a user of the driver assistance system, and
- if the further parking manoeuvre is selected, a stopping point (11) along the trajectory (12) is determined, the stopping point (11) being provided for the exit of a user of the vehicle (1) and the target position being reached in one go in the continuation of the parking operation.

2. Method according to claim 1,
**characterised in that**
the completion of the parking operation after the stopping point (11) is activated by a user of the vehicle (1).

3. Method according to any of the preceding claims,
**characterised in that**
the completion of the parking operation after the stopping point (11) is initiated and performed outside the vehicle (1).

4. Method according to any of the preceding claims,
**characterised in that**
the stopping point (11) of the vehicle (1) for the exit of a user is determined in such a way that the vehicle doors can be opened without a collision.

5. Method according to any of the preceding claims,
**characterised in that**
the trajectory (12, 13, 14) and the stopping point (11) for the exit of a user are determined and adapted in such a way that a predetermined distance from the detected objects (5, 6, 7) is maintained.

6. Method according to any of the preceding claims,
**characterised in that**
the trajectory (12, 13, 14) and the stopping point (11) for the exit of a user are determined and adapted while taking account of the seat occupation of the vehicle (1).

7. Method according to any of the preceding claims,
**characterised in that**
the completion of the parking operation after the stopping point (11) is initiated by a user either by means of a mobile control unit or by means of a voice actuation or gesture recognition device.

8. Method according to any of the preceding claims,
**characterised in that**
the travelling direction of the vehicle (1) during the parking operation is indicated by a lighting device on the vehicle.

9. Method according to any of the preceding claims,
**characterised in that**
the flashing frequency of the lighting device on the vehicle (1) is controlled as a function of the distance from the detected objects (5, 6, 7).

## Revendications

1. Procédé destiné à réaliser une opération de stationnement d'un véhicule automobile au moyen d'un système d'assistance au conducteur, comprenant les étapes suivantes consistant à :
- détecter des objets dans l'environnement du véhicule automobile ;
- déterminer une position cible en tenant compte de la détection de l'environnement ;
- déterminer une trajectoire dans la direction de la position cible ;
- réaliser l'opération de stationnement le long de la trajectoire déterminée au moyen d'un dispositif de commande, la trajectoire étant adaptée au cours de la réalisation de l'opération de stationnement en tenant compte des objets détectés en continu dans l'environnement ; **caractérisé en ce qu'**
- au début de l'opération de stationnement soit une manoeuvre directe de stationnement soit une autre manoeuvre de stationnement est sélectionnée par un utilisateur du système d'assistance au conducteur; et
- au moment de la sélection de l'autre manoeuvre de stationnement, un point d'arrêt (11) le long de la trajectoire est déterminé, le point d'arrêt (11) étant prévu pour permettre à un utilisateur de descendre du véhicule (1) et la position cible (10) étant atteinte lors de la poursuite de l'opération de stationnement d'une seule traite.

2. Procédé selon la revendication 1, **caractérisé en ce que** la fin de l'opération de stationnement est activée après le point d'arrêt (11) par un utilisateur du véhicule (1) automobile.

3. Procédé selon l'une quelconque des revendications précédentes, **caractérisé en ce que** la fin de l'opération de stationnement est commencée et poursuivie après le point d'arrêt (11) en dehors du véhicule (1) automobile.

4. Procédé selon l'une quelconque des revendications précédentes, **caractérisé en ce que** le point d'arrêt (11) du véhicule automobile (1) pour permettre la sortie d'un utilisateur est déterminé de sorte que les portes du véhicule automobile s'ouvrent sans risque de collision.

5. Procédé selon l'une quelconque des revendications précédentes, **caractérisé en ce que** la trajectoire (12, 13, 14) et le point d'arrêt (11) destiné à permettre la sortie d'un utilisateur sont déterminés et adaptés de sorte que les objets (5, 6, 7) soient maintenus à une distance prédéfinie.

6. Procédé selon l'une quelconque des revendications précédentes, **caractérisé en ce que** la trajectoire (12, 13, 14) et le point d'arrêt (11) destiné à permettre la sortie d'un utilisateur sont déterminés et adaptés en tenant compte de l'occupation d'une place du véhicule automobile (1).

7. Procédé selon l'une quelconque des revendications précédentes, **caractérisé en ce que** la fin de l'opération de stationnement est commencée après le point d'arrêt (11) par un utilisateur soit au moyen d'une unité de commande mobile soit au moyen d'un dispositif à commande vocale soit un dispositif de reconnaissance de gestes.

8. Procédé selon l'une quelconque des revendications précédentes, **caractérisé en ce que** la direction de marche du véhicule (1) automobile s'affiche pendant l'opération de stationnement par l'intermédiaire d'un dispositif d'éclairage monté sur le véhicule automobile.

9. Procédé selon l'une quelconque des revendications précédentes, **caractérisé en ce que** la fréquence de clignotement du dispositif d'éclairage du véhicule (1) automobile est réglée en fonction de la distance par rapport aux objets détectés (5, 6, 7).
